# EUROPÄISCHE PATENTSCHRIFT

(11) **EP 3 763 882 B1**
(45) Veröffentlichungstag und Bekanntmachung des Hinweises auf die Patenterteilung: **15.11.2023**
(21) Anmeldenummer: 20176499.0
(22) Anmeldetag: 26.05.2020
(51) Int. Cl.: E02F 3/36, E02F 9/24, E02F 9/26

(54) **SCHNELLWECHSLER**
QUICK CHANGE DEVICE
DISPOSITIF DE CHANGEMENT RAPIDE

(30) Priorität: 12.07.2019 DE 102019118913
(43) Veröffentlichungstag der Anmeldung: 13.01.2021
(73) Patentinhaber: OilQuick Deutschland KG, 82297 Steindorf (DE)
(72) Erfinder: Kollmann, Michael, 86492 Egling an der Paar (DE)
(74) Vertreter: Charrier Rapp & Liebau

(56) Entgegenhaltungen:
- WO-A1-2014/058380
- WO-A2-2012/085500
- GB-A- 2 451 304
- US-A1- 2018 255 707

## Beschreibung

Die Erfindung betrifft einen Schnellwechsler nach dem Oberbegriff des Anspruchs 1. Die Erfindung betrifft außerdem die Verwendung einer Anzeigevorrichtung für einen derartigen Schnellwechsler.

Solche Schnellwechsler werden zum einfachen und bequemen Wechseln von unterschiedlichen Anbaugeräten an Baumaschinen eingesetzt. Mit einem derartigen Schnellwechsler können z.B. Schwenklöffel, Greifer, Scheren, Verdichter, Magnete, Hydraulikhammer oder andere Anbaugeräte in wenigen Sekunden und mit hohem Sicherheitsstandard von einer Fahrerkabine aus z.B. an einem Ausleger eines Baggers an- bzw. abgekuppelt werden.

Aus der DE 10 2015 009 491 A1 ist ein gattungsgemäßer Schnellwechsler bekannt. Dieser enthält einen Träger, der an einer Seite erste Aufnahmen zur Halterung eines an einem Anbaugerät vorgesehenen ersten Kopplungselements und an der anderen Seite zweite Aufnahmen mit einem zwischen einer Lösestellung und einer Verriegelungsstellung bewegbaren Verriegelungselement zur lösbaren Halterung eines zweiten Kopplungselements aufweist. An dem Träger ist außerdem eine mechanische Anzeigevorrichtung zur Kontrolle der Verriegelung angeordnet.

Ferner ist aus der WO 2014 058 380 A1 ein Schnellwechselsystem bekannt, das erste bzw. zweite Sensoren zur Überprüfung einer korrekten Verschlussposition von Verschlusselementen bzw. eine korrekte Positionierung zwischen Haltebolzen und zu den Haltebolzen korrespondierenden Anlageöffnungen umfasst, wobei die von den Sensoren erfassten Daten in ein Führerhaus für eine auditive, visuelle oder taktile Anzeige des Kopplungszustandes gespielt werden können. Eine am Schnellwechselsystem angeordnete Anzeigevorrichtung sei hierdurch ersetzbar.

Aufgabe der Erfindung ist es, einen Schnellwechsler der eingangs genannten Art und eine Anzeigevorrichtung zur Verwendung bei einem derartigen Schnellwechsler zu schaffen, die eine verbesserte Kontrolle einer ordnungsgemäßen Verriegelung für einen Maschinenführer sowie sich im Gefahrenkreis der Maschine aufhaltende Personen ermöglichen.

Diese Aufgabe wird durch einen Schnellwechsler mit den Merkmalen des Anspruchs 1 und durch die Verwendung einer Anzeigevorrichtung für einen derartigen Schnellwechsler mit den Merkmalen des Anspruchs 11 gelöst. Zweckmäßige Ausgestaltungen und vorteilhafte Weiterbildungen der Erfindung sind in den Unteransprüchen angegeben.

Bei dem erfindungsgemäßen Schnellwechsler enthält die Anzeigevorrichtung eine elektrische Verriegelungsanzeige und eine elektrische Steuereinrichtung, welche die Verriegelungsanzeige in einer ausgefahrenen Verriegelungsstellung des Verriegelungselements aktiviert und in einer eingefahren Lösestellung und einer von der Verriegelungsstellung abweichenden Ausfahrstellung des Verriegelungselements deaktiviert. Eine korrekte Verriegelung wird also nur dann angezeigt, wenn sich auch das zweite Kopplungselement in seiner für eine korrekte Verriegelung vorgesehenen Stellung befindet. Für die Überwachung und Anzeige einer ordnungsgemäßen Verriegelung wird somit nicht nur die Stellung des Verriegelungselements, sondern auch die Position des zweiten Kopplungselements einbezogen. Dadurch kann die Kontrolle verbessert und die Sicherheit erhöht werden.

Unter Aktivierung der elektrischen Verriegelungsanzeige ist die Ausgabe eines bestimmten Signals der Verrieglungsanzeige zu verstehen. Unter Deaktivierung ist die Nicht-Ausgabe dieses bestimmten Signals zu verstehen. Wird das bestimmte Signal durch ein anderes Signal ersetzt, liegt im Sinne dieser Schrift ebenfalls eine Deaktivierung vor.

In einer vorteilhaften Ausführung kann die elektrische Steuereinrichtung ein durch die Bewegung des Verriegelungselements gesteuerter Schalter sein, der ein dem Verriegelungselement zugeordnetes erstes Schaltelement und ein der Verrieglungsanzeige/Anzeigevorrichtung zugehöriges zweites Schaltelement zur Steuerung der Verrieglungsanzeige enthält.

Der Schalter kann vorteilhaft ein elektro-mechanischer Schalter sein, der z.B. in Form eines Tasters ausgebildet ist. Der Taster kann beispielsweise als Rollentaster oder als Gleittaster ausgebildet sein. Ein Rollentaster ist verschleißarm, gegenüber einem Gleittaster jedoch aufwendiger zu fertigen. Rollentaster ist ein z.B. als drehbar gelagerte Rolle ausgebildetes, rotatorisch gelagertes Tastelement, das auf einer Steuerkurve abrollt. Ein Gleittaster ist ein nicht drehbar gelagertes Element, welches auf einer Steuerkurve gleitet oder schleift.

In einer anderen vorteilhaften Ausgestaltung ist genau ein Schalter vorgesehen. Im Vergleich zu einem Multi-Schalter-System ist ein Mono-Schalter-System einfacher und kostengünstiger. Denkbar und möglich ist jedoch auch eine Ausgestaltung als redundantes System.

Auch andere Schalterprinzipien sind möglich. So können z.B. auch berührungslos arbeitende Schalter wie z.B. elektrische und/oder magnetische Näherungsschalter oder dgl. verwendet werden.

Da erste Schaltelement kann in einer möglichen Ausführung mindestens einen mit dem zweiten Schaltelement zusammenwirkenden Nocken enthalten. Über den Nocken können Positions- bzw. Zustandsinformationen des Verriegelungselements auf einfache Art und Weise codiert werden. Diese Informationen können vom zweiten Schaltelement erfasst werden. Der Nocken kann Teil einer Steuerkurve sein. Ein Nocken kann positiv als Erhebung oder negativ als Vertiefung einer Steuerkurve mit einer positiven bzw. negativen Höhe ausgebildet sein.

Es kann vorgesehen sein, weitere Zustände des Verrieglungselements, beispielsweise bestimmte Zwischenpositionen des Verriegelungselements, zu überwachen. Hierzu kann im Falle eines als Tastglied ausgestalteten Sensors die Steuerkurve mit weiteren Nocken einfach angepasst werden.

Der Nocken kann insbesondere als Rotationsnocken, als Axialnocken oder als Linearnocken ausgestaltet sein. Dadurch sind verschiedene geometrisch vorteilhafte Anordnungen möglich. Bei einem Rotationsnocken ist der Nocken bzw. die Steuerkurve auf dem Umfang eines rotationssymmetrischen sich um seine Symmetrieachse drehenden Teils angebracht. Bei einem Axialnocken ist der Nocken bzw. die Steuerkurve axial auf der Stirnfläche eines sich um eine Rotationsachse drehenden Teils angebracht. Bei einem Linearnocken ist der Nocken bzw. die Steuerkurve entlang eines sich geradlinig verschiebbaren z.B. stabförmigen Teils angebracht.

In einer Ausführungsform kann eine Steuerkurve mehrere Nocken umfassen. Die Nocken können gleiche oder unterschiedliche Höhe aufweisen. Dadurch können mehr Informationen über eine Position und/oder Zustand des Verrieglungselements bereitgestellt werden.

Das zweite Schaltelement kann mechanisch über ein Gestänge, insbesondere ein starres Gestänge, mit dem Verrieglungselement verbunden sein. Dadurch ist eine einfache und robuste Ausführung der Anzeigevorrichtung möglich.

Die elektrische Verriegelungsanzeige enthält vorzugsweise einen optischen und/oder akustischen Signalgeber.

Opto-elektrische (kurz: optische) und akusto-elektrische (kurz: akustische) Signalgeber haben gegenüber mechanischen Anzeigemitteln den Vorteil geringer Reaktanz, und lassen sich in Sekundenbruchteilen steuern und regeln. Dies ermöglicht auch komplexe Signalmuster. Es ist z.B. möglich, neben Signalhöhe (Wellenlänge bzw. Tonhöhe) auch den Rhythmus der Signalabgabe anzupassen oder zu verändern. Optische und akustische Signalgeber können auch kombiniert werden.

Eine akustische Signalanlage ist beispielsweise ein Summer, eine Sirene oder ein Lautsprecher. Akustische Signalanlagen bieten den Vorteil, dass kein Sichtkontakt zwischen Signalgeber und Signal-Adressat vorhanden sein muss. Weiterhin können verschiedene Positionen oder Zustände des Verriegelungselements mit verschiedenen akustischen Signalen codiert werden, so dass beispielsweise während des Einkuppelvorgangs ein kontinuierlicher, dezenter Summton ertönt und nach erfolgtem Einkuppeln ein kurzer Bestätigungston ertönt.

Vorteilhaft ist der optische Signalgeber der elektrischen Verrieglungsanzeige als ein beispielsweise diffuses oder konzentriertes Licht ausstrahlende Leuchtmittel ausgebildet. Das Leuchtmittel kann z.B. als LED oder Laser ausgebildet sein. Optische Signalgeber haben den Vorteil, dass sie eingerichtet sein können, in nur eine oder in mehrere Richtungen abzustrahlen. Dies hat den Vorteil, dass auch weitere sich im Gefahrenkreis einer Baumaschine aufhaltenden Personen über Kopplungszustände eines Schnellwechslers informiert werden können. Leuchtmittel haben den Vorteil auch bei Nacht sichtbar zu sein. Je nach Anforderungen können ein oder auch mehrere Leuchtmittel vorgesehen sein. Ein Leuchtmittel kann eingerichtet sein, ein- oder mehrfarbig zu leuchten. Ein Leuchtmittel kann auch eingerichtet sein, in bestimmten Intervallen zu leuchten.

In einer vorteilhaften Ausgestaltung können die elektrische Verrieglungsanzeige und die elektrische Steuereinrichtung in einem gemeinsamen Gehäuse untergebracht sein. Dadurch sind die elektrischen Komponenten der Anzeigevorrichtung besser vor Witterungseinflüssen geschützt. Außerdem ist eine einfache Montage einer Anzeigevorrichtung an einem Schnellwechsler, insbesondere auch eine einfache Nachrüstbarkeit einer Anzeigevorrichtung an bereits in Betrieb befindlichen Schnellwechslern möglich.

In einer vorteilhaften Ausgestaltung der Erfindung kann das Gehäuse transparent oder semitransparent ausgebildet sein. Insbesondere als Leuchtmittel ausgebildete Signalgeber können dadurch innerhalb des Gehäuses platziert werden. Ein semitransparentes Gehäuse kann dann vorteilhaft als Licht-Diffusor so wirken, dass semi-transparente Teile des Gehäuses, wenn sie von einem Leuchtmittel angestrahlt werden, strahlen. Dadurch können großflächige Leuchtanzeigen realisiert werden, was die Sichtbarkeit erhöht. Eine Leuchtanzeige kann ein- oder mehrfarbig leuchten. Eine Leuchtanzeige kann mehrere Leuchtmittel umfassen, die ein- oder mehrfarbig leuchten. Das Gehäuse kann weiterhin reflektierende Flächen aufweisen. Dadurch lassen sich Leuchtsignale verstärken oder auch bündeln. Bestimmte Positionen oder Zustände des Verriegelungselements und damit bestimmte Kopplungszustände können durch bestimmte Farbwahl der Leuchtanzeige codiert werden. Beispielsweise kann ein langsames Blinken des Signalgebers in einer Farbe die Lösestellung des Verriegelungselements anzeigen, ein schnelles Blinken in einer anderen Farbe eine von Lösestellung und Verrieglungsstellung abweichende Stellung des Verriegelungselements anzeigen. Es ist aber auch möglich, nur ein einziges Signal zu verwenden, welches lediglich eine korrekte Kupplung in einer ausgefahrenen Verrieglungsstellung des Verriegelungselements anzeigt.

In einer weiteren, vorteilhaften Ausgestaltung kann die Anzeigevorrichtung einen Anschluss zum Anschluss einer externen Anzeige aufweisen. Bei einer externen Anzeige kann es sich beispielsweise um einen Bildschirm in einer Fahrerkabine einer Baumaschine handeln. Durch die Anschlussmöglichkeit werden Möglichkeiten zur Ausbildung redundanter Anzeigevorrichtungen geschaffen.

Die Erfindung betrifft außerdem die Verwendung einer Anzeigevorrichtung für einen vorstehend beschriebenen Schnellwechsler. Die Anzeigevorrichtung weist die zuvor beschriebenen Besonderheiten und Merkmale auf.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1a**: einen Schnellwechsler einer ersten perspektivischen Ansicht;
- **Figur 1b**: den Schnellwechsler von Figur 1 in einer zweiten perspektivischen Ansicht;
- **Figur 2**: ein Schnellwechselsystem mit einem in den Figuren 1A und 1B gezeigten Schnellwechsler und einem Adapter;
- **Figur 3a**: ein Schnellwechselsystem mit einem in den Figuren 1A und 1B gezeigten Schnellwechsler und einem Adapter in einer Lösestellung;
- **Figur 3b**: ein Schnellwechselsystem mit einem in den Figuren 1A und 1B gezeigten Schnellwechsler und einem Adapter in einer Verriegelungsstellung;
- **Figur 3c**: ein Schnellwechselsystem mit einem in den Figuren 1A und 1B gezeigten Schnellwechsler und einem Adapter in einer unverriegelten Stellung;
- **Figur 4a**: eine Anzeigeeinrichtung in einer Lösestellung;
- **Figur 4b**: eine Anzeigeeinrichtung in einer Verriegelungsstellung und
- **Figur 4c**: eine Anzeigeeinrichtung in einer unverriegelten Ausfahrstellung.

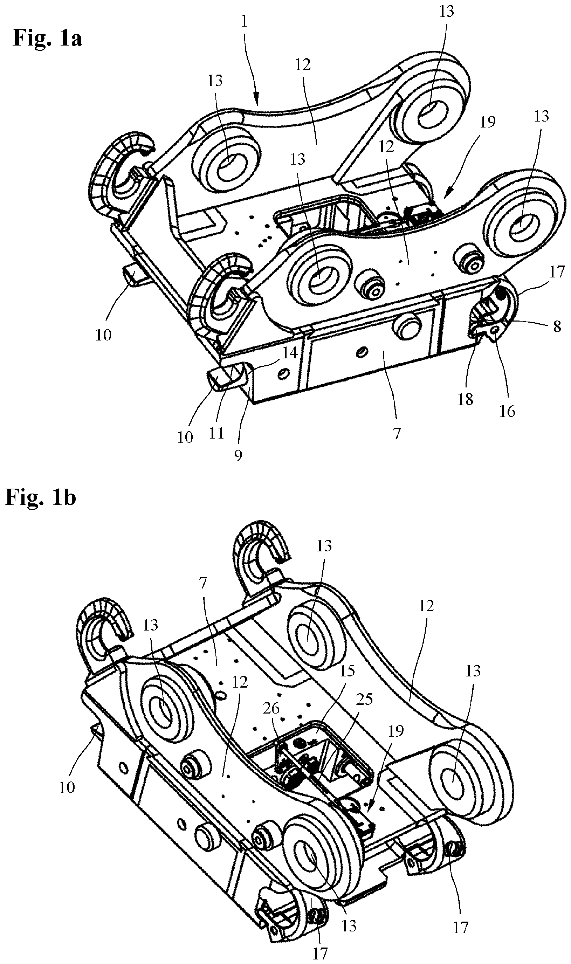

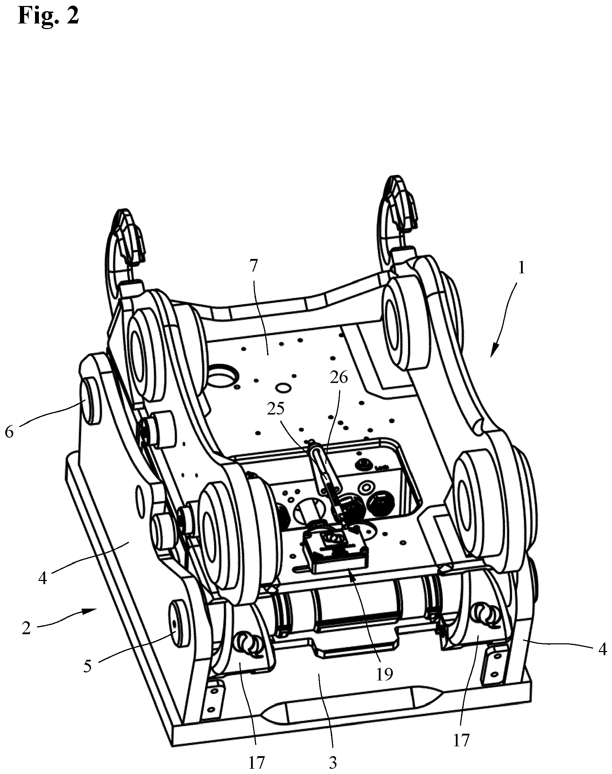

In den Figuren 1a und 1b ist ein Schnellwechsler 1 zum einfachen und bequemen Wechseln von unterschiedlichen Anbaugeräten an Baumaschinen, insbesondere Baggern, gezeigt. Mit einem derartigen Schnellwechsler können z.B. Schwenklöffel, Greifer, Scheren, Magnete, Verdichter, Hydraulikhammer oder andere mechanische bzw. hydraulische Anbaugeräte z.B. über einen in Figur 2 gezeigten Adapter 2 einfach und bequem von einer Fahrerkabine aus an einem Ausleger oder einem anderen Anbauteil eines Baggers oder anderen Baufahrzeugs an- bzw. abgekuppelt werden.

Gemäß Figur 2 enthält der an einem Anbaugerät befestigbare Adapter 2 eine Grundplatte 3 und zwei zueinander parallele Seitenwangen 4, zwischen denen ein erstes bolzenförmiges Kopplungselement 5 und ein davon in einem vorgegeben Abstand beabstandetes zweites bolzenförmiges Kopplungselement 6 zur lösbaren Verbindung mit dem Schnellwechsler 1 angeordnet sind. Die beiden bolzenförmigen Kopplungselemente 5 und 6 können in entsprechende Bohrungen in den Seitenwangen 4 eingesteckt und dort fixiert sein. Die bolzenförmigen Kopplungselemente 5 und 6 können aber auch direkt an dem Anbaugerät angeordnet sein.

Der in den Figuren 1a und 1b in unterschiedlichen Perspektiven dargestellte Schnellwechsler 1 enthält einen als Schweiß- oder Gußteil ausgeführten Träger 7, der an einer Seite nach vorne offene erste Aufnahmen 8 zur Aufnahme und Halterung des ersten bolzenförmigen Kopplungselements 5 und an der anderen Seite nach unten offene zweite Aufnahmen 9 mit einem Verriegelungselement 10 zur Aufnahme und Halterung des zweiten bolzenförmigen Kopplungselements 6 aufweist.

Bei dem gezeigten Ausführungsbeispiel enthält der Schnellwechsler 1 an der einen Seite des Trägers 7 zwei voneinander beabstandete Aufnahmen 8 für das erste Kopplungselement 5 und auf der anderen Seite zwei Aufnahmen 9 für das zweite Kopplungselement 6. Die nach vorne offenen ersten Aufnahmen 8 sind klauen- oder gabelförmig ausgeführt. Die nach unten offenen zweiten Aufnahmen 9 weisen eine gekrümmte Anlagefläche 11 zur Anlage des zweiten bolzenförmigen Kopplungselements 6 auf. Der Träger 9 enthält an seiner Oberseite zwei zueinander parallele Seitenteile 12, in denen durchgängige Öffnungen 13 für nicht dargestellte Befestigungsbolzen zur Befestigung des Schnellwechslers 1 an einem Ausleger eines Baggers oder einem Anschlussteil eines anderen Baufahrzeugs vorgesehen sind.

Der Schnellwechsler 1 enthält in der gezeigten Ausführung auch zwei als Verriegelungsbolzen ausgebildete Verriegelungselemente 10, die innerhalb des Trägers 7 in Figur 1a gezeigten Führungsbohrungen 14 verschiebbar geführt und gemeinsam durch einen in Figur 1b gezeigten H-förmigen Zylinder 15 hydraulisch zwischen einer eingefahrenen Lösestellung zum Lösen oder Ankoppeln eines Anbaugeräts und einer ausgefahrenen Verriegelungsstellung V verschiebbar sind. In der Verriegelungsstellung V werden die nach unten offenen zweiten Aufnahmen 9 von den in den Führungsbohrungen 14 angeordneten Verriegelungselementen 10 an der Unterseite geschlossen, so dass das zweite bolzenförmige Kopplungselement 6 von den Verriegelungselementen 10 untergriffen wird.

An den Aufnahmen 8 für das erste Kopplungselement 5 sind außerdem um eine Querachse 16 schwenkbare Fanghaken 17 angeordnet. Diese Fanghaken 17 sind von den Kopplungselementen 5 über eine Nase 18 zwischen einer nach unten geschwenkten Kupplungsstellung und einer nach oben verschwenkten Schließstellung schwenkbar.

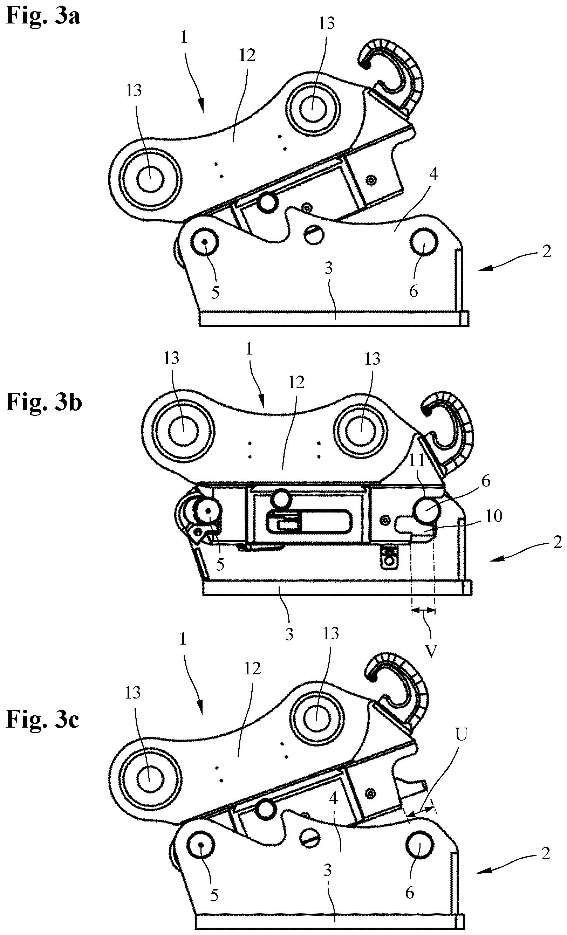

Um mit Hilfe des Schnellwechslers 1 ein Anbaugerät anzukuppeln, wird der in der Regel an einem Ausleger eines Baggers angeordnete Schnellwechsler 1 gemäß Figur 3A zunächst so bewegt, dass das z.B. an dem Adapter 2 oder an dem Anbaugerät angeordnete erste Kopplungselement 5 in die klauen- bzw. gabelförmigen Aufnahmen 8 auf der einen Seite des Schnellwechslers 1 eingefahren wird. Wenn das erste Kopplungselement 5 zum ordnungsgemäßen Eingriff in die Aufnahmen 8 gelangt, werden auch die Fanghaken 17 über die Nasen 18 aus der nach unten geschwenkten Kupplungsstellung in die nach oben geschwenkte Schließstellung bewegt. Bei Einkuppeln des ersten Kopplungselements befinden sich die Verriegelungselemente 10 in einer vollständig in den Träger 7 zurückgezogenen Lösestellung L.

Dann wird der Schnellwechsler 1 mit noch zurückgezogenen Verriegelungselementen 10 um das erste bolzenförmige Kopplungselement 5 so geschwenkt, dass das zweite Kopplungselement 6 am Adapter 2 oder Anbaugerät gemäß Figur 3b zur Anlage an den Anlageflächen 11 der nach unten offenen Aufnahmen 9 auf der anderen Seite des Schnellwechslers 1 gelangt. Anschließend können die in den Führungsbohrungen 14 im Träger 7 des Schnellwechslers 1 verschiebbar angeordneten Verriegelungselemente 10 hydraulisch in eine in Figur 3b gezeigte Verriegelungsstellung V ausgefahren werden, so dass das zweite bolzenförmige Kopplungselement 6 von den beiden Verriegelungselementen 10 an dem Schnellwechsler 1 untergriffen und das Anbaugerät somit an dem Schnellwechsler 1 gehalten wird.

Allerdings kann es bei unsachgemäßer Bedienung zu fehlerhaften Kupplungsvorgängen und damit zu einer nicht korrekten Verriegelung kommen. Ein fehlerhafter Kupplungsvorgang liegt z.B. vor, wenn die Verriegelungselemente 11 ausgefahren werden, noch bevor die Kopplungselemente 5 in ihrer korrekten Verriegelungsposition sind, d.h. an der unteren Anlagefläche 11 des Trägers 7 anschlagen. Dies kann z.B. der Fall sein, wenn der Schnellwechsler 1 aufgrund einer Fehlbedienung oder aufgrund einer Verschmutzung zwischen Adapter 2 und Schnellwechsler 1 nicht ordnungsgemäß abgesenkt wird. In diesem Fall fahren die Verriegelungselemente 10 zwar aus, ohne jedoch die Kopplungselemente 5 des Adapters 2 zu erfassen und diese gegenüber dem Träger 7 des Schnellwechslers 1 zu verspannen. Die Verriegelungselemente 10 fahren wie in Fig. 3c gezeigt oberhalb der bolzenförmigen Kopplungselemente 5 aus, so dass keine feste Verbindung zwischen Adapter 2 und Schnellwechsler 1 zustande kommt. Bei fehlenden Kopplungselementen 5 fahren die bolzenförmigen Verriegelungselemente 10 aufgrund eines dann fehlenden Anschlags über die in Figur 3b gezeigte Verriegelungsstellung V hinaus in eine in Figur 3c dargestellte unverriegelte Ausfahrstellung U. Trotz ausgefahrenen Verriegelungselementen 10 liegt dann keine korrekte Verriegelung vor, so dass der Adapter 1 mit dem daran befestigten Anbaugerät beim Anheben des Schnellwechslers 1 aus den Aufnahmen 9 rutschen kann und ggf. durch die Fanghaken 17 aufgefangen werden muss. Um eine korrekte Verrieglung zu überprüfen, ist an dem Träger 7 des Schnellwechslers 1 eine mit den Verriegelungselementen 10 gekoppelte Anzeigevorrichtung 19 angeordnet.

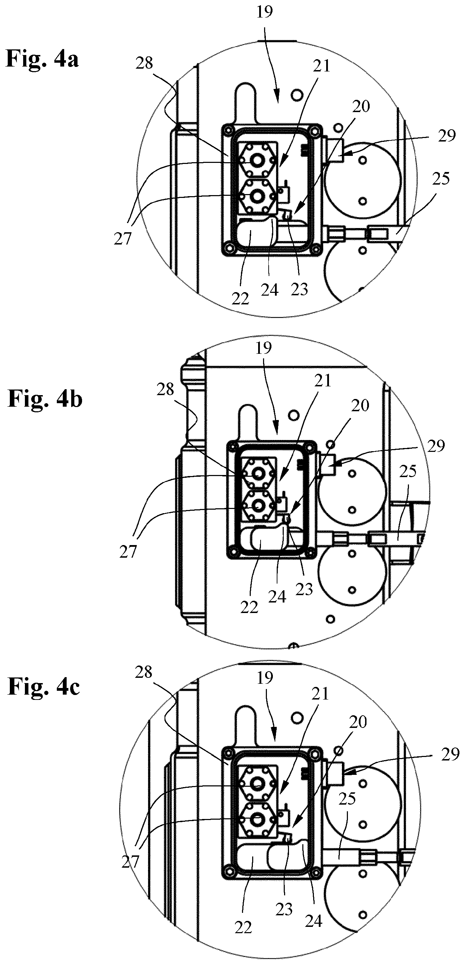

Wie aus den Figuren 4a bis 4c hervorgeht, weist die Anzeigevorrichtung 19 eine elektrische Steuereinrichtung 21 zur Kontrolle eines korrekten Verriegelungszustandes bzw. einer korrekten Position des zwischen einer eingefahrenen Lösestellung, einer ausgefahrenen Verriegelungsstellung V und einer von der Verrieglungsstellung abweichenden, unverriegelten Ausfahrstellung U beweglichen Verriegelungselements 10 und einen mit der Steuereinrichtung 21 verbundene elektrische Verrieglungsanzeige 20 zur Anzeige zumindest einer korrekten Verrieglungsstellung V mit einem ersten Signal und zur Anzeige einer von der korrekten Verrieglungsstellung V abweichenden, unverriegelten Ausfahrstellung U und/oder eingefahrenen Lösestellung des Verriegelungselements 10 durch ein zweites Signal auf. Das zweite Signal besteht in dem Ausführungsbeispiel lediglich in der Deaktivierung des ersten Signals.

Bei dem gezeigten Ausführungsbeispiel ist die elektrische Steuereinrichtung 21 als ein durch die Bewegung des Verriegelungselements 10 betätigter Schalter mit einem dem Verriegelungselement 10 zugeordneten ersten Schaltelement 22 und einem der Verrieglungsanzeige 20 zugehörigen zweiten Schaltelement 23 zur Steuerung des Signalgebers 21 ausgeführt. Das zweite Schaltelement 23 ist als ein durch das erste Schaltelement 22 betätigter in einer Achse verschieblicher Taster ausgebildet. Der Taster ist als Rollentaster ausgeführt. Das erste Schaltelement 22 ist als Nockenschieber (Linearnocken) mit einem mit dem zweiten Schaltelement 23 zusammenwirkenden Nocken 24 ausgeführt. Die elektrische Steuereinrichtung 21 kann aber auch als berührungslos wirkender Schalter, wie z.B. induktiver Näherungssensor oder dgl. ausgeführt sein.

Im Ausführungsbeispiel weist der Nockenschieber eine Steuerkurve mit genau einen Nocken 24 auf, wobei der Nocken bzw. die Position des Nockens eine korrekte Verrieglungsstellung V des Verriegelungselements 10 codiert. Der Nocken ist hier als sinusförmige Erhebung mit einer bestimmten Höhe ausgestaltet. Das hier als Nockenschieber mit dem Nocken 24 ausgebildete erste Schaltelement 22 ist über ein in Figur 2 gezeigtes, starres Gestänge 25 und eine Halterung 26 mit dem zur Verschiebung der Verriegelungselemente 10 dienenden Zylinder 15 verbunden. Durch eine über den Zylinder 15 bewirkte Verschiebung der Verriegelungselemente 10 in die in den Figuren 3a bis 3c gezeigten Stellungen wird über das Gestänge 25 auch das als Nockenschieber mit dem Nocken 24 ausgebildete erste Schaltelement 22 in die in den Figuren 4a bis 4c gezeigten Positionen verschoben.

Die elektrische Steuereinrichtung 21 ist derart ausgestaltet, dass die Signalgeber umfassende elektrische Verriegelungsanzeige 20 nur dann aktiviert wird, wenn sich die Verriegelungselemente 10 in der in Figur 3b gezeigten Verriegelungsstellung V befinden.

In dem gezeigten Ausführungsbeispiel sind die durch die elektrische Steuereinrichtung 21 gesteuerten Signalgeber der elektrischen Verrieglungsanzeige 20 als optischer Signalgeber 27 mit zwei hier als Leuchtdioden ausgebildeten Leuchtmitteln ausgeführt. Durch zwei separate Leuchtmittel kann die Erkennbarkeit der Leuchtanzeige verbessert werden. Anstelle oder zusätzlich zu den Leuchtelementen kann die elektrische Verriegelungsanzeige auch akustische Signalgeber, z.B. einen Lautsprecher, aufweisen.

In der Verrieglungsstellung V wird die Verrieglungsanzeige 20 in Form der Leuchtmittel aktiviert, d.h. die Steuereinrichtung 21 schließt hier in Form des zweiten Schaltelements 22 einen Stromkreis zum Betrieb der Leuchtmittel. Das zweite Schaltelement wirkt hier als analoger Schalter bzw. ist mit einem solchen verbunden, sodass das durch die Nocke 24 ausgelenkte zweite Schaltelement 23 die elektrische Verrieglungsanzeige unmittelbar steuert. Dem zweiten Schaltelement 23 könnte jedoch auch zum mittelbaren Schließen des Stromkreises eine elektrische Verarbeitungseinrichtung vor- oder nachgeschaltet sein. Bei dem Stromkreis kann es sich um einen zum Bordnetz der Baumaschine gehörenden Stromkreis handeln. Denkbar und möglich ist jedoch auch eine unabhängige Versorgung der elektrischen Anzeigevorrichtung 19 z.B. durch ein wiederaufladbares Batterieelement. Dieses könnte z.B. innerhalb des Gehäuses 28 angebracht sein. Sobald sich das Verriegelungselement 10 aus der Verriegelungsstellung V bewegt, geht die Auslenkung des Rollentasters zurück auf die Basislinie des Nockenschiebers und unterbricht die Stromversorgung der Leuchtmittel, so dass die elektrische Verriegelungsanzeige deaktiviert wird.

In anderen hier nicht dargestellten Ausführungsformen weist der Nockenschieber mehrere Nocken 24 mit unterschiedlichen Höhen auf, die unterschiedliche Positionen bzw. Zustände der Verriegelungselemente 10 codieren.

Zum Schutz vor Verunreinigungen, Beschädigungen und Witterung sind die elektrische Verrieglungsanzeige 20 und die elektrische Steuereinrichtung 21 in einem gemeinsamen Gehäuse 28 untergebracht. Das hier eckig ausgeführte Gehäuse ist an seiner Oberseite mit einer durchsichtig gestalteten Deckplatte transparent ausgeführt. Das Gehäuse könnte jedoch an weiteren Seiten transparente Elemente aufweisen oder auch vollständig durchsichtig ausgeführt sein. Andere im Ausführungsbeispiel nicht gezeigte Gehäuseformen sind möglich, insbesondere runde, halbrunde oder kuppelartig gewölbte Gehäuseformen. Durch die Formgebung kann die Sichtbarkeit nach mehreren Seiten vorteilhaft verbessert werden. In einer anderen Ausführungsform kann das Gehäuse auch teilweise oder vollständig semitransparent ausgeführt sein. Dadurch werden Blendeffekte verringert und die Leuchtfläche vergrößert.

Am Gehäuse 28 ist ein Anschluss 29 zur Verbindung mit externen Anzeigen oder dergleichen angebracht. Über den Anschluss können Signale der Anzeigevorrichtung abgegriffen werden und z.B. zur Ausgabe an einem externen im Führerhaus einer Baumaschine befindlichen Bildschirm weitergeleitet werden.

### Bezugszeichenliste

- 1: Schnellwechsler
- 2: Adapter
- 3: Grundplatte
- 4: Seitenwange
- 5: Erstes Kopplungselement
- 6: Zweites Kopplungselement
- 7: Träger
- 8: Erste Aufnahme
- 9: Zweite Aufnahme
- 10: Verriegelungselement
- 11: Anlagefläche
- 12: Seitenteil
- 13: Öffnung
- 14: Führungsbohrung
- 15: Zylinder
- 16: Querachse
- 17: Fanghaken
- 18: Nase
- 19: Anzeigevorrichtung
- 20: elektrische Verriegelungsanzeige
- 21: Elektrische Steuereinrichtung
- 22: Erstes Schaltelement
- 23: Zweites Schaltelement
- 24: Nocken
- 25: Gestänge
- 26: Halterung
- 27: Signalgeber
- 28: Gehäuse
- 29: Anschluss

## Patentansprüche

1. Schnellwechsler (1) zum automatischen Wechseln eines Anbaugeräts an einer Baumaschine, der an einer Seite eines Trägers (7) angeordnete erste Aufnahmen (8) zur Aufnahme eines ersten Kopplungselements (5), an der anderen Seite des Trägers (7) angeordnete zweite Aufnahmen (9) mit mindestens einem zwischen einer Lösestellung zum An- oder Abkoppeln des Anbaugeräts und einer Verriegelungsstellung (V) zur Halterung des Anbaugeräts (2) am Schnellwechsler (1) bewegbaren Verriegelungselement (10) zur Aufnahme eines zweiten Kopplungselements (6) und eine am Träger (7) angeordnete Anzeigevorrichtung (19) zur Kontrolle der Verriegelung enthält, **dadurch gekennzeichnet, dass** die am Träger (7) angeordnete Anzeigevorrichtung (19) eine elektrische Verriegelungsanzeige (20) und eine elektrische Steuereinrichtung (21) enthält, welche die Verriegelungsanzeige (20) in einer ausgefahrenen Verriegelungsstellung (V) des Verriegelungselements (10) aktiviert und in einer eingefahren Lösestellung und einer von der Verriegelungsstellung abweichenden Ausfahrstellung (U) des Verriegelungselements (10) deaktiviert.

2. Schnellwechsler (1) nach Anspruch 1 **dadurch gekennzeichnet, dass** die elektrische Steuereinrichtung (21) als ein durch die Bewegung des Verriegelungselements (10) gesteuerter Schalter mit einem dem Verriegelungselement (10) zugeordneten ersten Schaltelement (22) und einem der Verriegelungsanzeige (20) zugeordneten zweiten Schaltelement (23) zur Steuerung der Verriegelungsanzeige (21) ausgebildet ist.

3. Schnellwechsler (1) nach Anspruch 2, **dadurch gekennzeichnet, dass** das zweite Schaltelement (23) als ein durch das erste Schaltelement (22) betätigter Taster ausgebildet ist.

4. Schnellwechsler (1) nach Anspruch 2 oder 3, **dadurch gekennzeichnet, dass** das erste Schaltelement (22) mindestens einen mit dem zweiten Schaltelement (23) zusammenwirkenden Nocken (24) enthält.

5. Schnellwechsler (1) nach Anspruch 2 oder 3, **dadurch gekennzeichnet, dass** das zweite Schaltelement (23) über ein Gestänge (25), insbesondere starres Gestänge, mechanisch mit dem Verrieglungselement (10) verbunden ist.

6. Schnellwechsler (1) nach einem der Ansprüche 2 bis 5, **dadurch gekennzeichnet, dass** die elektrische Verriegelungsanzeige (20) mindestens einen optischen und/oder akustischen Signalgeber (27) umfasst.

7. Schnellwechsler (1) nach Anspruch 6, **dadurch gekennzeichnet, dass** der optische Signalgeber (27) der elektrischen Verriegelungsanzeige (20) als ein Leuchtmittel ausgebildet ist.

8. Schnellwechsler (1) nach einem der vorhergehenden Ansprüche, **dadurch gekennzeichnet, dass** die elektrische Verrieglungsanzeige (20) und die elektrische Steuereinrichtung (21) in einem gemeinsamen Gehäuse (28) untergebracht sind.

9. Schnellwechsler (1) nach Anspruch 8, **dadurch gekennzeichnet, dass** das Gehäuse (28) transparent oder semitransparent ausgestaltet ist.

10. Schnellwechsler (1) nach einem der vorhergehenden Ansprüche, **dadurch gekennzeichnet, dass** die Anzeigevorrichtung (19) einen Anschluss (29) zum Anschluss einer externen Anzeige aufweist.

11. Verwendung einer Anzeigevorrichtung (19) für einen Schnellwechsler (1) zum automatischen Wechseln eines Anbaugeräts an einer Baumaschine, der an einer Seite eines Trägers (7) angeordnete erste Aufnahmen (8) zur Aufnahme eines ersten Kopplungselements (5), an der anderen Seite des Trägers (7) angeordnete zweite Aufnahmen (9) mit mindestens einem zwischen einer Lösestellung zum An- oder Abkoppeln des Anbaugeräts und einer Verriegelungsstellung (V) zur Halterung des Anbaugeräts (2) am Schnellwechsler (1) bewegbaren Verriegelungselement (10) zur Aufnahme eines zweiten Kopplungselements (6) und eine am Träger (10) angeordnete Anzeigevorrichtung (19) zur Kontrolle der Verriegelung aufweist, **dadurch gekennzeichnet, dass** die am Träger (7) angeordnete Anzeigevorrichtung (19) eine elektrische Verriegelungsanzeige (20) und eine elektrische Steuereinrichtung (21) enthält, welche die Verriegelungsanzeige (20) in einer ausgefahrenen Verriegelungsstellung (V) des Verriegelungselements (10) aktiviert und in einer eingefahren Lösestellung und einer von der Verriegelungsstellung abweichenden Ausfahrstellung (U) des Verriegelungselements (10) deaktiviert.

## Claims

1. Quick coupler (1) for automatically changing an attachment on a construction machine, comprising first receptacles (8) arranged on one side of a carrier (7) for receiving a first coupling element (5), second receptacles (9), arranged on the other side of the carrier (7), having at least one locking element (10), which can be moved between a release position for coupling or uncoupling the attachment and a locking position (V) for holding the attachment (2) on the quick coupler (1), for receptacle of a second coupling element (6), and a display device (19), arranged on the carrier (7), for checking the locking, **characterized in that** the display device (19) arranged on the carrier (7) contains an electrical lock status indicator (20) and an electrical control unit (21) which activates the lock status indicator (20) in an extended locking position (V) of the locking element (10) and deactivates it in a retracted release position and an extended position (U) of the locking element (10) which differs from the locking position.

2. Quick coupler (1) according to claim 1, **characterized in that** the electrical control unit (21) is designed as a switch controlled by the movement of the locking element (10) and having a first switching element (22) assigned to the locking element (10) and a second switching element (23) assigned to the lock status indicator (20) for controlling the lock status indicator (21).

3. Quick coupler (1) according to claim 2, **characterized in that** the second switching element (23) is designed as a sensing device actuated by the first switching element (22).

4. Quick coupler (1) according to claim 2 or 3, **characterized in that** the first switching element (22) comprises at least one cam (24) cooperating with the second switching element (23).

5. Quick coupler (1) according to claim 2 or 3, **characterized in that** the second switching element (23) is mechanically connected to the locking element (10) via a linkage (25), in particular rigid linkage.

6. Quick coupler (1) according to one of claims 2 to 5, **characterized in that** the electrical lock status indicator (20) comprises at least one optical and/or acoustic signal emitter (27).

7. Quick coupler (1) according to claim 6, **characterized in that** the optical signal emitter (27) of the electrical lock status indicator (20) is designed as an illuminant.

8. Quick coupler (1) according to one of the preceding claims, **characterized in that** the electrical locking indicator (20) and the electrical control unit (21) are accommodated in a common housing (28).

9. Quick coupler (1) according to claim 8, **characterized in that** the housing (28) is transparent or semitransparent.

10. Quick coupler (1) according to one of the preceding claims, **characterized in that** the display device (19) has a connector (29) for connecting an external display.

11. Use of a display device (19) for a quick coupler (1) for automatically changing an attachment on a construction machine, comprising first receptacles (8) arranged on one side of a carrier (7) for receiving a first coupling element (5), second receptacles (9), arranged on the other side of the carrier (7), having at least one locking element (10), which can be moved between a release position for coupling or uncoupling the attachment and a locking position (V) for holding the attachment (2) on the quick coupler (1), for receptacle of a second coupling element (6), and a display device (19), which is arranged on the carrier (10), for checking the locking, **characterized in that** the display device (19) arranged on the carrier (7) contains an electrical lock status indicator (20) and an electrical control unit (21) which activates the lock status indicator (20) in an extended locking position (V) of the locking element (10) and deactivates it in a retracted release position and an extended position (U) of the locking element (10) which differs from the locking position.

## Revendications

1. Attache rapide (1) pour le changement automatique d'un accessoire sur un engin de chantier, qui comporte des premiers logements (8) disposés sur une face d'un support (7) pour la réception d'un premier élément d'accouplement (5), des deuxièmes logements (9) disposés sur l'autre face du support (7) avec au moins un élément de verrouillage (10) mobile entre une position de libération pour l'accouplement ou le désaccouplement de l'accessoire et une position de verrouillage (V) pour la retenue de l'accessoire (2) sur l'attache rapide (1) pour la réception d'un deuxième élément d'accouplement (6) et un dispositif d'affichage (19) disposé sur le support (7) pour le contrôle du verrouillage, **caractérisée en ce que** le dispositif d'affichage (19) disposé sur le support (7) comporte un écran de verrouillage (20) électrique et un système de commande électrique (21), lequel active l'écran de verrouillage (20) dans une position de verrouillage (V) sortie de l'élément de verrouillage (10) et le désactive dans une position de libération rentrée et une position sortie (U) de l'élément de verrouillage (10) différente de la position de verrouillage.

2. Attache rapide (1) selon la revendication 1 **caractérisée en ce que** le système de commande électrique (21) est réalisé sous la forme d'un commutateur commandé par le mouvement de l'élément de verrouillage (10) avec un premier élément de commutation (22) associé à l'élément de verrouillage (10) et un deuxième élément de commutation (23) associé à l'écran de verrouillage (20) pour la commande de l'écran de verrouillage (21) .

3. Attache rapide (1) selon la revendication 2, **caractérisée en ce que** le deuxième élément de commutation (23) est réalisé sous la forme d'un bouton-poussoir actionné par le premier élément de commutation (22).

4. Attache rapide (1) selon la revendication 2 ou 3, **caractérisée en ce que** le premier élément de commutation (22) comporte au moins une came (24) coopérant avec le deuxième élément de commutation (23).

5. Attache rapide (1) selon la revendication 2 ou 3, **caractérisée en ce que** le deuxième élément de commutation (23) est relié mécaniquement à l'élément de verrouillage (10) par l'intermédiaire d'une tringlerie (25), en particulier d'une tringlerie fixe.

6. Attache rapide (1) selon l'une quelconque des revendications 2 à 5, **caractérisée en ce que** l'écran de verrouillage (20) électrique comprend au moins un générateur de signaux optiques et/ou acoustiques (27).

7. Attache rapide (1) selon la revendication 6, **caractérisée en ce que** le générateur de signaux optiques (27) de l'écran de verrouillage (20) électrique est réalisé sous la forme d'un moyen d'éclairage.

8. Attache rapide (1) selon l'une quelconque des revendications précédentes, **caractérisée en ce que** l'écran de verrouillage (20) électrique et le système de commande électrique (21) sont logés dans un boîtier (28) commun.

9. Attache rapide (1) selon la revendication 8, **caractérisée en ce que** le boîtier (28) est conçu de manière transparente ou semi-transparente.

10. Attache rapide (1) selon l'une quelconque des revendications précédentes, **caractérisée en ce que** le dispositif d'affichage (19) présente un raccord (29) pour le raccordement d'un écran externe.

11. Utilisation d'un dispositif d'affichage (19) pour une attache rapide (1) pour le changement automatique d'un accessoire sur un engin de chantier, qui présente des premiers logements (8) disposés sur une face d'un support (7) pour la réception d'un premier élément d'accouplement (5), des deuxièmes logements (9) disposés sur l'autre face du support (7) avec au moins un élément de verrouillage (10) mobile entre une position de libération pour l'accouplement ou le désaccouplement de l'accessoire et une position de verrouillage (V) pour la retenue de l'accessoire (2) sur l'attache rapide (1) pour la réception d'un deuxième élément d'accouplement (6) et un dispositif d'affichage (19) disposé sur le support (10) pour le contrôle du verrouillage, **caractérisée en ce que** le dispositif d'affichage (19) disposé sur le support (7) comporte un écran de verrouillage (20) électrique et un système de commande électrique (21), lequel active l'écran de verrouillage (20) dans une position de verrouillage (V) sortie de l'élément de verrouillage (10) et le désactive dans une position de libération rentrée et une position sortie (U) de l'élément de verrouillage (10) différente de la position de verrouillage.
